# EUROPÄISCHE PATENTSCHRIFT

(11) **EP 3 861 599 B1**
(45) Veröffentlichungstag und Bekanntmachung des Hinweises auf die Patenterteilung: **26.11.2025**
(21) Anmeldenummer: 19779437.3
(22) Anmeldetag: 25.09.2019
(51) Int. Cl.: H01R 9/24, H01R 9/26

(54) **BAUGRUPPE EINER ELEKTRISCHEN EINRICHTUNG UND VERFAHREN ZUM HERSTELLEN EINER SOLCHEN BAUGRUPPE**
ASSEMBLY FOR ELECTRICAL EQUIPMENT AND METHOD FOR PRODUCING SUCH AN ASSEMBLY
MODULE D'UN DISPOSITIF ÉLECTRIQUE ET PROCÉDÉ DE FABRICATION DUDIT MODULE

(30) Priorität: 02.10.2018 DE 102018124322
(43) Veröffentlichungstag der Anmeldung: 11.08.2021
(73) Patentinhaber: Phoenix Contact GmbH & Co. KG, 32825 Blomberg (DE)
(72) Erfinder: SCHRADER, Andreas, 33129 Delbrück (DE); WERNER, Ingo, 32670 Detmold (DE)
(86) Internationale Anmeldenummer: PCT/EP2019/075804
(87) Internationale Veröffentlichungsnummer: WO 2020/069932

(56) Entgegenhaltungen:
- WO-A1-2017/019605
- CN-U- 207 088 493
- DE-A1- 102016 105 725
- DE-A1- 4 128 329
- FR-A1- 2 742 004
- US-A- 2 892 176
- US-A- 5 839 922
- US-A1- 2012 064 780

## Beschreibung

Die Erfindung betrifft eine Baugruppe einer elektrischen Einrichtung nach dem Oberbegriff des Anspruchs 1 sowie ein Verfahren zum Herstellen einer Baugruppe einer elektrischen Einrichtung.

Eine derartige Baugruppe umfasst eine Mehrzahl von modular entlang einer Anreihrichtung aneinander anreihbaren Anschlusseinrichtungen, die je ein Gehäuse und zumindest eine Anschlussstelle zum Anschließen zumindest eines elektrischen Leiters aufweisen. Weiter umfasst eine derartige Baugruppe ein Verbindungselement, das einen Grundkörper und einen an dem Grundkörper geformten Verbindungsabschnitt aufweist und das ausgebildet ist, zwei entlang der Anreihrichtung zueinander benachbarte Anschlusseinrichtungen der Mehrzahl von Anschlusseinrichtungen miteinander zu verbinden.

Derartige Baugruppen sind beispielsweise aus der FR 2 742 004 A1, DE 41 28 329 A1 und US 5 839 922 A bekannt.

Eine solche Anschlusseinrichtung kann beispielsweise als Anschlussklemme, zum Beispiel als Reihenklemme, ausgeführt sein. Eine solche Anschlusseinrichtung kann aber beispielsweise auch als Steckverbinder zum steckenden Verbinden mit einem zugeordneten Gegensteckverbinder oder als sogenannte Grundleiste, an die eine Mehrzahl von modularen Steckverbindern angeschlossen werden können, ausgeführt sein.

Durch Kombinieren einer Mehrzahl von Anschlusseinrichtungen soll beispielsweise eine Baugruppe geschaffen werden, die an einer Leiterplatte anzuordnen ist, um auf diese Weise elektrische Anschlüsse an der Leiterplatte zur Verfügung stellen. Wünschenswert ist hierbei, gegebenenfalls unterschiedliche Anschlusseinrichtungen, die sich beispielsweise in der Kontur ihrer Gehäuse unterscheiden, miteinander verbinden zu können, um eine Baugruppe variabel zur Bereitstellung unterschiedlicher Anschlussfunktionalitäten zum Beispiel an einer Leiterplatte ausgestalten zu können.

Bei herkömmlichen Baugruppen dieser Art ist vorgesehen worden, benachbarte Anschlusseinrichtungen formschlüssig zum Beispiel über Rastverbindungen oder sogenannte Schwalbenschwanz-Nut/Feder-Kombinationen miteinander zu verbinden.

Solche formschlüssigen Verbindungen erfordern eine dedizierte Anpassung der aneinander anzureihenden Anschlusseinrichtungen aneinander.

Bei einem aus der DE 295 22 289 U1 bekannten Klemmenblock für Elektrizitätszähler sind Klemmenanordnungen über Zwischenplatten miteinander verbunden. Die Zwischenplatten dienen dazu, eine elektrische Isolierung zwischen benachbarten Klemmenanordnungen zur Verfügung zu stellen und sind hierzu aus einem schlagfesten Kunststoff hergestellt.

Bei einem aus der EP 1 434 308 B1 bekannten Reinklemmensystem ist eine Reihenklemme einer Bauart zwischen Reihenklemmen einer anderen Bauart angeordnet und über Distanzplatten zu den Reihenklemmen der anderen Bauart beabstandet. Die Distanzplatten sind hierbei so breit ausgebildet, dass ein Querverbindungselement mit Kontaktstiften in Form von Spitzen an Anschlussstellen sämtlicher Reihenklemmen angesetzt werden kann.

Aus der DE 20 2013 104 467 U1 ist eine Reihenklemmenanordnung bekannt, bei der zwischen benachbarten Reihenklemmen Trennplatten zur elektrischen Isolierung angeordnet sind.

Bei einer aus der DE 20 2010 015 731 U1 bekannten Reihenklemmanordnung ist zwischen zwei einander benachbarten Reihenklemmen eine Abstützscheibe angeordnet, die Abstützarme zur Abstützung der Anordnung gegenüber einer Leiterplatte aufweist.

US 2 892 176 A offenbart ein System zum Aufbau einer Reihe von Modulen mit Kontaktanschlüssen, das Zwischenabschirmungen umfasst, die zwischen benachbarten Modulen montiert und an jedem von ihnen mit einer Schwalbenschwanzverbindung befestigt werden.

Aufgabe der vorliegenden Erfindung ist es, eine Baugruppe einer elektrischen Einrichtung sowie ein Verfahren zum Herstellen einer Baugruppe einer elektrischen Einrichtung zur Verfügung zu stellen, die eine Verbindung benachbarter Anschlusseinrichtungen in variabler Weise ermöglichen.

Diese Aufgabe wird durch einen Gegenstand mit den Merkmalen des Anspruchs 1 gelöst. Demnach ist das Verbindungselement über den Verbindungsabschnitt stoffschlüssig mit dem Gehäuse zumindest einer der zwei zueinander benachbarten Anschlusseinrichtungen verbunden.

Zwei zueinander benachbarte Anschlusseinrichtungen werden somit über ein dazwischen angeordnetes Verbindungselement miteinander verbunden. Das Verbindungselement ist hierbei mit zumindest einer der benachbarten, miteinander zu verbindenden Anschlusseinrichtungen stoffschlüssig zu verbinden, sodass in verbundenem Zustand ein Stoffschluss zwischen dem Verbindungselement und der zugeordneten Anschlusseinrichtung besteht.

Die stoffschlüssige Verbindung kann beispielsweise durch Verkleben oder Verschweißen des Verbindungselements mit der zugeordneten Anschlusseinrichtung hergestellt werden. Bei Verkleben wird der Verbindungsabschnitt des Verbindungselements mit einem geeigneten Klebstoff benetzt und an die zugeordnete Anschlusseinrichtung angesetzt, sodass das Verbindungselement mit der Anschlusseinrichtung verklebt wird. Eine Schweißverbindung kann beispielsweise durch Laserschweißen, insbesondere Laser-Durchstrahlschweißen, durch Ultraschallschweißen oder durch ein anderes Schweißverfahren insbesondere zum Schweißen von Kunststoffteilen geschaffen werden.

Über das Verbindungselement können die Gehäuse benachbarter Anschlusseinrichtungen in variabler Weise miteinander verbunden werden, wobei die Gehäuse eine gleiche oder auch eine unterschiedliche Gehäusekontur aufweisen können. Dadurch, dass das Verbindungselement stoffschlüssig mit zumindest einer, vorzugsweise mit beiden der zueinander benachbarten Anschlusseinrichtungen verbunden wird, können sich die Gehäuse der Anschlusseinrichtungen in ihrer Bauform und Größe voneinander unterscheiden. Die Verbindung wird jeweils über das Verbindungselement, das stoffschlüssig mit einer oder mit beiden benachbarten Anschlusseinrichtungen verbunden wird, hergestellt, was es einem Anwender ermöglicht, die Baugruppe durch Kombination unterschiedlicher Anschlusseinrichtungen variabel zu konfigurieren.

Zum Herstellen der Baugruppe werden die Anschlusseinrichtungen entlang der Anreihrichtung aneinander angereiht, wobei zwischen je zwei entlang der Anreihrichtung zueinander benachbarten Anschlusseinrichtungen ein Verbindungselement angeordnet wird. Das Verbindungselement wird stoffschlüssig insbesondere durch Verkleben oder Verschweißen mit einem, vorzugsweise mit beiden der benachbarten Anschlusseinrichtungen verbunden, sodass die Anschlusseinrichtungen über das zwischengelagerte Verbindungselement aneinander festgelegt werden.

Das Verbindungselement weist einen Grundkörper und einen an dem Grundkörper geformten Verbindungsabschnitt auf. Der Grundkörper erstreckt sich erfindungsgemäss entlang einer senkrecht zur Anreihrichtung gerichteten Ebene und bildet einen Flächenabschnitt aus, der sich bei miteinander verbundenen Anschlusseinrichtungen flächig zwischen den benachbarten Anschlusseinrichtungen erstreckt. Ist das Verbindungselement aus einem elektrisch isolierenden Kunststoffmaterial gefertigt, kann über den Grundkörper somit auch eine elektrische Isolierung zwischen benachbarten Anschlusseinrichtungen zur Verfügung gestellt werden.

Der Verbindungsabschnitt, der zur Herstellung der stoffschlüssigen Verbindung mit zumindest einer der Anschlusseinrichtungen dient, erstreckt sich, in einer Ausgestaltung, zumindest abschnittsweise umfänglich um den Grundkörper herum. Der Grundkörper wird in einer Ausgestaltung durch den Verbindungsabschnitt in der senkrecht zur Anreihrichtung erstreckten Ebene begrenzt, indem sich der Verbindungsabschnitt stirnseitig an dem Grundkörper erstreckt. Der Verbindungabschnitt kann sich hierbei zum Beispiel vollumfänglich um den Grundkörper herum erstrecken und den Grundkörper somit in geschlossener Weise (betrachtet umfänglich um die Anreihrichtung) einfassen. Alternativ kann sich der Verbindungsabschnitt an zwei oder an drei Seiten an dem Grundkörper erstrecken und den Grundkörper somit lediglich abschnittsweise begrenzen.

In einer Ausgestaltung erstreckt sich der Verbindungsabschnitt in einer Stellung, in der das Verbindungselement an die zumindest eine der zwei zueinander benachbarten Anschlusseinrichtungen angesetzt ist, zumindest abschnittsweise um das Gehäuse der Anschlusseinrichtung herum. Das Verbindungselement ist somit derart an das Gehäuse der zugeordneten Anschlusseinrichtung angesetzt, dass sich der Verbindungsabschnitt außenseitig an dem Gehäuse und um das Gehäuse herum erstreckt. Über den Verbindungsabschnitt wird die Verbindung des Verbindungselements mit der zugeordneten Anschlusseinrichtung hergestellt, sodass durch die umfängliche Erstreckung um das Gehäuse herum eine feste und belastbare Verbindung des Verbindungselements mit der zugeordneten Anschlusseinrichtung geschaffen wird.

In einer Ausgestaltung steht der Verbindungsabschnitt entlang der Anreihrichtung an zumindest einer Seite von dem Grundkörper vor. Der Verbindungsabschnitt kann beispielsweise als entlang der Anreihrichtung von dem Grundkörper vorstehender Stegabschnitt ausgebildet sein, mit dem das Verbindungselement an das Gehäuse der zugeordneten Anschlusseinrichtung angesetzt werden kann, um das Verbindungselement mit der Anschlusseinrichtung stoffschlüssig zu verbinden.

Der Stegabschnitt kann hierzu derart an das Gehäuse der zugeordneten Anschlusseinrichtung anzusetzen sein, dass der Stegabschnitt in einer Stellung, in der das Verbindungselement an die Anschlusseinrichtung angesetzt ist, das Gehäuse der Anschlusseinrichtung so übergreift, dass der Stegabschnitt - betrachtet quer zur Anreihrichtung - einer an dem Gehäuse angeordneten Verbindungsfläche zugewandt ist. Über den Stegabschnitt kann somit insbesondere durch Verkleben oder Verschweißen eine Verbindung zwischen dem Verbindungselement und dem Gehäuse der Anschlusseinrichtung hergestellt werden, indem der Stegabschnitt mit der Verbindungsfläche des Gehäuses einen Stoffschluss durch Verkleben oder Verschweißen eingeht.

Dadurch, dass der Stegabschnitt - betrachte quer zur Anreihrichtung - der Verbindungsfläche zugewandt ist, ergibt sich eine Anlage zwischen dem Stegabschnitt und der Verbindungsfläche entlang einer Richtung quer zur Anreihrichtung. Dies ermöglicht insbesondere, bei Herstellen eines Stoffschlusses durch Laserstrahlschweißen, einen Laserstrahl von außen in eine Richtung quer zur Anreihrichtung auf die Anordnung von Anschlusseinrichtung und Verbindungselement zu richten, sodass durch Aufschmelzen des Materials des Stegabschnitts und/oder der Verbindungsfläche eine stoffschlüssige Verbindung zwischen dem Verbindungselement und dem Gehäuse der Anschlusseinrichtung geschaffen wird.

Wird das Verbindungselement durch Laser-Durchstrahlschweißen mit der zugeordneten Anschlusseinrichtung verbunden, so kann der Stegabschnitt beispielsweise aus einem für einen Laserschweißstrahl transparenten (Kunststoff-)Material gefertigt sein, während das Gehäuse an seiner Verbindungsfläche aus einem Material gefertigt ist, das Energie des Laserschweißstrahls absorbiert und somit durch den Laserschweißstrahl aufgeschmolzen werden kann. Ein für den Laserschweißstrahl transparentes Material kann beispielsweise durch ein thermoplastisches Kunststoffmaterial gebildet sein. Ein den Laserschweißstrahl absorbierendes Material kann demgegenüber beispielsweise durch Beimengung von Partikeln, zum Beispiel Rußpartikeln, zu einem thermoplastischen Kunststoff erhalten werden. Beim Laser-Durchstrahlschweißen wird der Laserschweißstrahl von außen auf den für den Laserschweißstrahl transparenten Stegabschnitt gerichtet. Der Laserschweißstrahl durchdringt den Stegabschnitt und trifft auf die Verbindungsfläche, an der der Laserschweißstrahl zumindest teilweise absorbiert wird und die somit aufgrund der Energie im Laserschweißstrahl aufgeschmolzen wird, sodass eine schlossschlüssige Verbindung zwischen der Verbindungsfläche und dem Stegabschnitt hergestellt wird.

In einer Ausgestaltung weist das Gehäuse der mit dem Verbindungselement stoffschlüssig zu verbindenden Anschlusseinrichtung am Übergang einer parallel zum Grundkörper des Verbindungselements erstreckten, ersten Gehäuseseite zu einer quer zur ersten Gehäuseseite erstreckten, zweiten Gehäuseseite eine Stufe auf, die eine gegenüber der zweiten Gehäuseseite zurückversetzte Verbindungsfläche ausbildet. Das Verbindungselement ist hierbei derart an das Gehäuse der Anschlusseinrichtung ansetzbar, dass der Verbindungsabschnitt des Verbindungselements mit der Stufe in Eingriff und dadurch in flächige Anlage mit der Verbindungsfläche an der Stufe gelangt. Zwischen dem Verbindungsabschnitt und der Verbindungsfläche im Bereich der Stufe kann die stoffschlüssige Verbindung hergestellt werden, um das Verbindungselement mit der Anschlusseinrichtung zu verbinden.

Vorteilhafterweise weist das Gehäuse einer jeden Anschlusseinrichtung zumindest eine solche Stufe zur Verbindung mit einem zugeordneten Verbindungselement auf.

Das Gehäuse weist weiter vorteilhaft an entlang der Anreihrichtung beabstandeten, Seitenflächen des Gehäuses ausbildenden Gehäuseseiten jeweils zumindest eine Stufe auf, sodass die Anschlusseinrichtung an einander abgewandten Gehäuseseiten mit je einem Verbindungselement verbunden werden kann.

In einer Ausgestaltung liegt der Verbindungsabschnitt des Verbindungselements derart in der Stufe ein, dass der Verbindungsabschnitt an seiner nach außen gewandten Außenseite bündig mit der zweiten Gehäuseseite ist. Dadurch, dass die an der Stufe geformte Verbindungsfläche gegenüber der zweiten Gehäuseseite zurückversetzt ist und der Verbindungsabschnitt des Verbindungselements in die Stufe eingreift, kann eine Baugruppe geschaffen werden, die an der zweiten Seite der Anschlusseinrichtung eben und bündig ist, insbesondere ohne dass das Verbindungselement mit seinem Verbindungsabschnitt zu der zweiten Gehäuseseite nach außen hin vorspringt.

In einer Ausgestaltung können über ein Verbindungselement mehrere Paare von entlang einer Höhenrichtung senkrecht zur Anreihrichtung zueinander versetzten Anschlusseinrichtungen miteinander verbunden werden. So kann das Verbindungselement vorteilhaft dazu ausgebildet sein, ein erstes Paar von entlang der Anreihrichtung zueinander benachbarten Anschlusseinrichtungen und ein zweites Paar von entlang der Anreihrichtung zueinander benachbarten Anschlusseinrichtungen, das entlang der senkrecht zur Anreihrichtung erstreckten Höhenrichtung zu dem ersten Paar von Anschlusseinrichtungen versetzt angeordnet ist, miteinander zu verbinden. Über solche Verbindungselemente können somit zwei (oder mehr) Reihen von Anschlusseinrichtungen miteinander verbunden werden, sodass eine variabel konfigurierbare Baugruppe zur Bereitstellung einer Vielzahl von Anschlussstellen zum Anschließen von elektrischen Leitern geschaffen werden kann. Das Verbindungselement ist hierbei stoffschlüssig jeweils mit zumindest einer der Anschlusseinrichtungen des ersten Paares und zumindest einer der Anschlusseinrichtung des zweiten Paares zu verbinden, wobei vorzugsweise das Verbindungselement eine stoffschlüssige Verbindung mit beiden Anschlusseinrichtungen sowohl des ersten Paares als auch des zweiten Paares eingeht und somit die Anschlusseinrichtungen stoffschlüssig zueinander festlegt.

Die Aufgabe wird auch gelöst durch ein Verfahren zum Herstellen einer Baugruppe einer elektrischen Einrichtung, bei dem eine Mehrzahl von modularen Anschlusseinrichtungen, die je ein Gehäuse und zumindest eine Anschlussstelle zum Anschließen eines elektrischen Leiters aufweisen, entlang einer Anreihrichtung aneinander angereiht werden. Bei dem Verfahren werden zwei entlang der Anreihrichtung zueinander benachbarte Anschlusseinrichtungen der Mehrzahl von Anschlusseinrichtungen über ein Verbindungselement, das einen Grundkörper und einen an dem Grundkörper geformten Verbindungsabschnitt aufweist, miteinander verbunden, indem das Verbindungselement über den Verbindungsabschnitt stoffschlüssig mit dem Gehäuse zumindest einer der zwei zueinander benachbarten Anschlusseinrichtungen verbunden wird.

Die vorangehend für die Baugruppe geschilderten Vorteile und vorteilhaften Ausgestaltungen finden analog auch auf das Verfahren Anwendung, sodass auf das vorangehend Ausgeführte verwiesen werden soll.

Der der Erfindung zugrunde liegende Gedanke soll nachfolgend anhand der in den Figuren dargestellten Ausführungsbeispiele näher erläutert werden. Es zeigen:
- Fig. 1: eine Ansicht einer Baugruppe mit zwei über ein Verbindungselement miteinander verbundenen Anschlusseinrichtungen;
- Fig. 2: eine gesonderte Ansicht eines Ausschnitts einer der Anschlusseinrichtungen;
- Fig. 3: eine gesonderte Ansicht eines Ausschnitts des Verbindungselements;
- Fig. 4: eine Ansicht einer Baugruppe mit zwei Paaren von Anschlusseinrichtungen, die über ein gemeinsames Verbindungselement miteinander verbunden sind; und
- Fig. 5: eine Explosionsansicht der Anordnung gemäß Fig. 4.

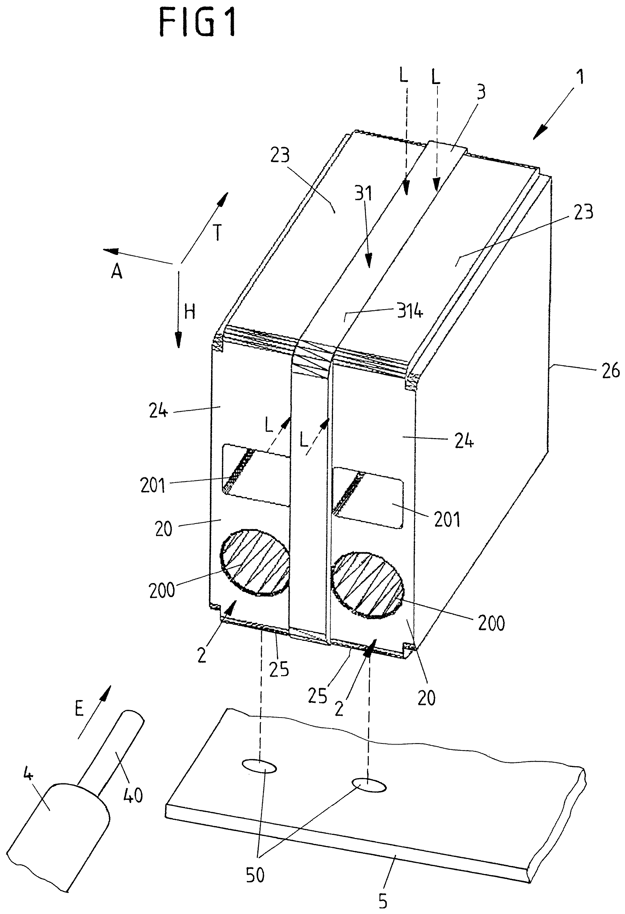

Fig. 1 zeigt ein Ausführungsbeispiel einer Baugruppe 1, die Anschlusseinrichtungen 2 in Form von entlang einer Anreihrichtung A aneinander anreihbaren, modularen Anschlussklemmen aufweist.

Eine jede Anschlusseinrichtung 2 weist ein Gehäuse 20 mit einer darin geformten Anschlussstelle in Form einer Stecköffnung 200 und einer Betätigungsöffnung 201 auf. In die Stecköffnung 200 kann ein elektrischer Leiter 4 in eine Steckrichtung E mit einem abisolierten Leiterende 40 eingesteckt werden, um innerhalb des Gehäuses 20 mit einer geeigneten Kontaktierungseinrichtung in Form eines Federkraftanschlusses, eines Schraubanschlusses, eines Schneidanschlusses, eines Crimpanschlusses oder eines anderen Anschlusses zur elektrischen Kontaktierung mit einem elektrischen Kontaktierungsabschnitt, zum Beispiel einer Stromschiene, elektrisch zu kontaktieren. Über die Betätigungsöffnung 201 kann beispielsweise ein Betätigungselement, zum Beispiel ein Drücker zum Freigeben eines Federkraftanschlusses oder ein Schraubelement zum klemmenden Arretieren oder Lösen des elektrischen Leiters 4, betätigt werden.

Durch Anreihen einer Vielzahl von Anschlusseinrichtungen 2 entlang der Anreihrichtung A kann eine Baugruppe 1 geschaffen werden, an der eine Vielzahl von Anschlussstellen 200 zum Anschließen einer Vielzahl von elektrischen Leitern 2 bereitgestellt wird. Die Baugruppe 1 kann beispielsweise an einer Leiterplatte 5 angeordnet und über Kontaktierungsstellen 50 elektrisch mit der Leiterplatte 5 verbunden werden, sodass über die Baugruppe 1 eine Anschlussbaugruppe an der Leiterplatte 5 zum elektrischen Anschließen von elektrischen Leitern 4 an die Leiterplatte 5 bereitgestellt wird.

Im Rahmen der Baugruppe 1 sind zwei benachbarte Anschlusseinrichtungen 2 über ein Verbindungselement 3 miteinander verbunden.

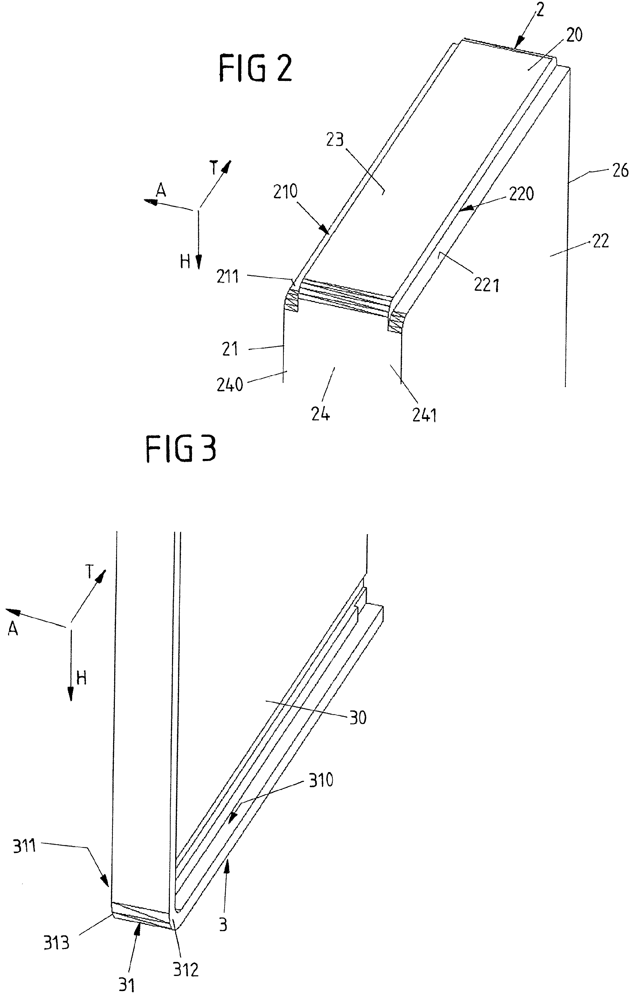

Wie aus Fig. 3 ersichtlich, weist das Verbindungselement 3 einen Grundkörper 30 in Form eines Flächenabschnitts auf, der entlang einer senkrecht zur Anreihrichtung A gerichteten Ebene erstreckt ist und, bei miteinander verbundenen Anschlusseinrichtungen 2, eine Zwischenlage zwischen den zwei benachbarten Anschlusseinrichtungen 2 einnimmt.

Der Grundkörper 30 ist an drei Seiten durch einen Verbindungsabschnitt 31 begrenzt, der stirnseitig an dem Grundkörper 30 geformt ist und mit zwei Stegabschnitten 312, 313 beidseitig entlang der Anreihrichtung A von dem Grundkörper 30 vorsteht. Am Übergang zwischen dem Grundkörper 30 und dem Verbindungsabschnitt 31 sind auf diese Weise beidseitig des Grundkörpers 30 Stufen 310, 311 gebildet, die zum Zusammenwirken mit dem Gehäuse 20 jeweils benachbarter Anschlusseinrichtungen 2 zum Herstellen einer stoffschlüssigen Verbindung dienen.

Wie aus Fig. 1 ersichtlich, erstreckt sich der Verbindungsabschnitt 31 des Verbindungselements 3 bei miteinander verbundenen Anschlusseinrichtungen 2 an drei Seiten umlaufend um die Gehäuse 20 der Anschlusseinrichtungen 2 herum. Mit den Stegabschnitten 312, 313 übergreift das Verbindungselement 3 hierbei die Gehäuse 20 der Anschlusseinrichtungen 2 entlang der Anreihrichtung A, sodass eine Anlage des Verbindungsabschnitts 31 mit an den Gehäusen 20 der Anschlusseinrichtungen 2 gebildeten, aus Fig. 2 ersichtlichen Verbindungsflächen 211, 221, 240, 241 besteht.

Die Gehäuse 20 der Anschlusseinrichtungen 2 sind jeweils vorzugsweise aus einem elektrisch isolierenden Kunststoff gefertigt und fassen, in elektrisch isolierender Weise, jeweils eine elektrische Kontaktierungseinrichtung im Inneren des Gehäuses 20 ein. Am Übergang zwischen seitlichen Gehäuseseiten 21, 22 und einer oberen Gehäuseseite 23 sowie am Übergang zwischen den seitlichen Gehäuseseiten 21, 22 und einer unteren Gehäuseseite 25 (siehe Fig. 1) sind jeweils Stufen 210, 220 gebildet, in die jeweils ein an eine der Gehäuseseiten 21, 22 anzusetzendes Verbindungselement 3 mit seinem Verbindungsabschnitt 31 eingreifen kann, um auf diese Weise eine Verbindung zwischen dem Gehäuse 20 der Anschlusseinrichtung 2 und dem Verbindungselement 3 herzustellen, wie dies aus Fig. 1 ersichtlich ist.

Ist das Verbindungselement 3 an eine zugeordnete Anschlusseinrichtung 2 angesetzt, so ist der Verbindungsabschnitt 31 mit einer Außenseite 314 jeweils bündig mit der oberen Gehäuseseite 23 sowie der unteren Gehäuseseite 25 der jeweils zugeordneten Anschlusseinrichtung 2, sodass das Verbindungselement 3 mit seinem Verbindungsabschnitt 31 entlang einer Höhenrichtung H senkrecht zur Anreihrichtung A nicht von dem Gehäuse 20 der jeweils zugeordneten Anschlusseinrichtung 2 vorsteht.

Während an der oberen Gehäuseseite 23 und der unteren Gehäuseseite 25 jeweils Stufen 210, 220 gebildet sind, sind im Bereich der vorderen Gehäuseseite 24 keine Stufen mit gegenüber der vorderen Gehäuseseite 24 zurückversetzten Verbindungsflächen 240, 241 vorhanden. Hier liegt der Verbindungsabschnitt 31 eines jeweils zugeordneten Verbindungselements 3 vorderseitig an der Gehäuseseite 24 an und steht entlang einer Tiefenrichtung T senkrecht zur Anreihrichtung A und senkrecht zur Höhenrichtung H von der Gehäuseseite 24 vor, wie dies aus Fig. 1 ersichtlich ist.

Das Verbindungselement 3 kann stoffschlüssig mit beiden angrenzenden Anschlusseinrichtungen 2 verbunden werden. Eine solche stoffschlüssige Verbindung kann hierbei auf unterschiedliche Weise hergestellt werden.

In einer Ausgestaltung können die Anschlusseinrichtungen 2 über das Verbindungselement 3 miteinander verbunden werden, indem das Verbindungselement 3 mit den Gehäusen 20 der Anschlusseinrichtungen 2 verklebt wird. Das Verbindungselement 3 wird hierzu beispielsweise im Bereich seiner Stegabschnitte 312, 313 mit einem geeigneten Klebstoff benetzt und auf diese Weise klebend mit den Gehäusen 20 der Anschlusseinrichtungen 2 verbunden.

In anderer Ausgestaltung wird das Verbindungselement 3 durch Laserschweißen, insbesondere Laser-Durchstrahlschweißen, mit den Gehäusen 20 der Anschlusseinrichtungen 2 verbunden. Ein Laserschweißstrahl L kann hierzu jeweils senkrecht zur Anreihrichtung A entlang der Flächennormalen des Verbindungsabschnitts 31 von außen auf die Stegabschnitte 312, 313 gerichtet werden, wie dies aus Fig. 1 ersichtlich ist, sodass der Verbindungsabschnitt 31 an den Stegabschnitten 312, 313 schweißend mit den Gehäusen 20 der Anschlusseinrichtungen 2 verbunden wird.

Zum Laser-Durchstrahlschweißen ist das Verbindungselement 3 zumindest im Bereich der Stegabschnitte 312, 313 des Verbindungsabschnitts 31 aus einem für den Laserschweißstrahl L transparenten Material gefertigt, sodass der Laserschweißstrahl L durch die Stegabschnitte 312, 313 hindurch dringen und auf das jeweils zugeordnete Gehäuse 20 im Bereich der jeweiligen Verbindungsfläche 211, 221, 240, 241 auftreffen kann. Das Gehäuse 20 ist im Bereich der jeweiligen Verbindungsfläche 211, 221, 240, 241 hierbei aus einem Laserlicht-absorbierenden Material gefertigt, sodass Energie des Laserschweißstrahls L auf Seiten des Gehäuses 20 absorbiert und das Gehäuse 20 im Bereich der Verbindungsfläche 211, 221, 240, 241 teilweise aufgeschmolzen wird. Auf diese Weise geht das Gehäuse 20 eine stoffschlüssige Verbindung insbesondere mit dem Verbindungsabschnitt 31 ein, sodass das Verbindungselement 3 stoffschlüssig mit den angrenzenden Gehäusen 20 verbunden wird.

Dadurch, dass der Verbindungsabschnitt 31 an drei Seiten um die Gehäuse 20 der Anschlusseinrichtungen 2 herum erstreckt ist, werden die Anschlusseinrichtungen 2 über das Verbindungselement 3 fest und belastbar miteinander verbunden. Zum Herstellen der stoffschlüssigen Verbindung ist hierbei nicht erforderlich, dass die Gehäuse 20 der angrenzenden Anschlusseinrichtungen 2 notwendigerweise konturgleich sind, sondern die Gehäuse 20 können in ihrer Bauform voneinander abweichen.

Sind die Anschlusseinrichtungen 2 über Verbindungselemente 3 zum Schaffen der Baugruppe 1 miteinander verbunden worden, so kann die Baugruppe 1 mit den unteren Gehäuseseiten 25 der Anschlusseinrichtungen 2 zum Beispiel an eine Leiterplatte 5 angesetzt werden, um die Baugruppe 1 mechanisch und elektrisch an der Leiterplatte 5 zu montieren.

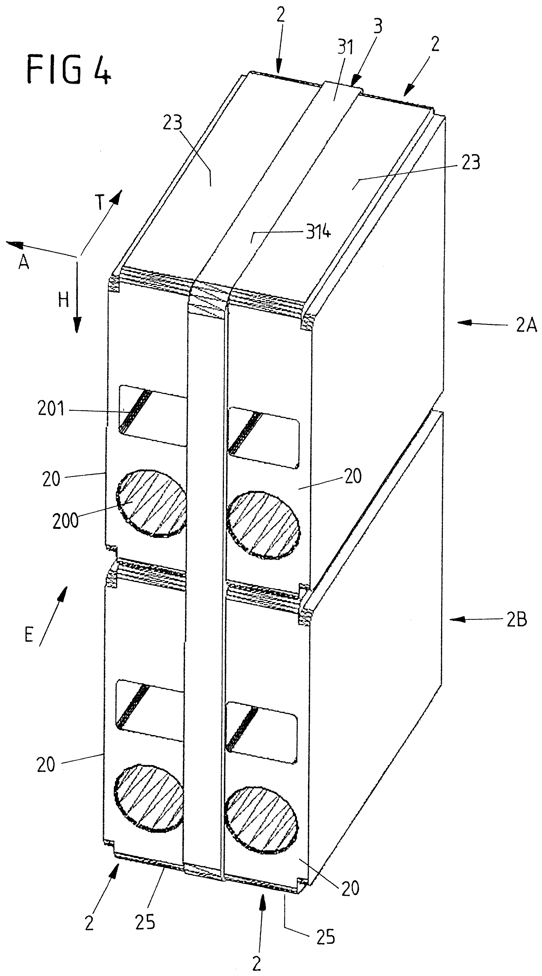

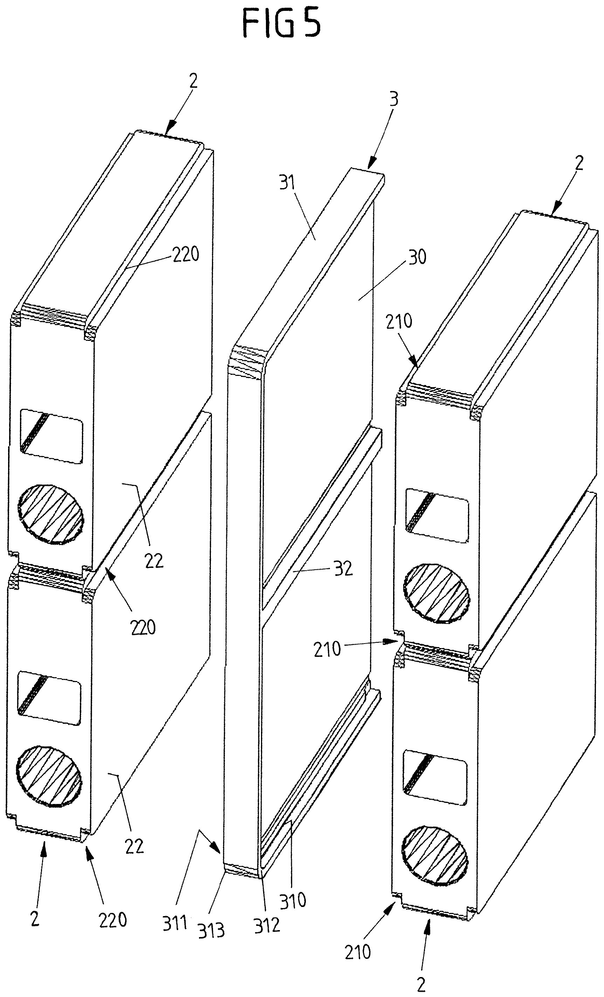

Bei dem Ausführungsbeispiel gemäß Fig. 1 bis 3 können Anschlusseinrichtungen 2 entlang der Anreihrichtung A aneinander angereiht und über Verbindungselemente 3 in Zwischenlage zwischen jeweils benachbarten Anschlusseinrichtungen 2 miteinander verbunden werden, um eine einreihige Anordnung von Anschlusseinrichtungen 2 zu schaffen. Bei einem in Fig. 4 und 5 dargestellten Ausführungsbeispiel können demgegenüber mehrere Reihen von Anschlusseinrichtungen 2 geschaffen werden, die über Verbindungselemente 3 miteinander verbunden werden, sodass eine mehrreihige Baugruppe 1 von Anschlusseinrichtungen 2 bereitgestellt wird.

Bei dem in Fig. 4 und 5 dargestellten Ausführungsbeispiel werden über ein Verbindungselement 3 zwei Paare 2A, 2B von Anschlusseinrichtungen 2 miteinander verbunden. Die Paare 2A, 2B der Anschlusseinrichtungen 2 sind hierbei entlang der senkrecht zur Anreihrichtung A gerichteten Höhenrichtung H zueinander versetzt, sodass Anschlusseinrichtungen 2 eines ersten Paares 2A oberhalb von Anschlusseinrichtungen 2 eines zweiten Paares 2B angeordnet sind. Das Verbindungselement 3 erstreckt sich über die gemeinsame Höhe der in Höhenrichtung H aneinander angesetzten Paare 2A, 2B der Anschlusseinrichtungen 2 und verbindet die beiden Paare 2A, 2B der Anschlusseinrichtungen 2 miteinander.

Die Gehäuse 20 der Anschlusseinrichtungen 2 sind jeweils wie vorangehend anhand des Ausführungsbeispiels gemäß Fig. 1 bis 3 erläutert ausgeführt. Das Verbindungselement 3 erstreckt sich jedoch über die (im Vergleich zum Verbindungselement 3 gemäß Fig. 1 bis 3) doppelte Höhe und kann stoffschlüssig jeweils mit den entlang der Anreihrichtung A anschließenden Anschlusseinrichtungen 2 verbunden werden.

Die entlang der Höhenrichtung H aneinander angesetzten Anschlusseinrichtungen 2 bilden aufgrund der Stufen oberseitig und unterseitig des Gehäuses 20 dort, wo sie aneinander angesetzt sind, eine Nut aus, wie dies aus Fig. 5 ersichtlich ist. Das Verbindungselement 3 weist, wie dies aus Fig. 5 ersichtlich ist, beidseitig je einen von dem Grundkörper 30 vorstehenden, entlang der Tiefenrichtung T erstreckten, mittigen Eingriffssteg 32 auf, der dazu dient, bei aneinander angesetzten Anschlusseinrichtungen 2 in die Nut zwischen den entlang der Höhenrichtung H aneinander angrenzenden Anschlusseinrichtungen 2 einzugreifen, sodass die Anschlusseinrichtungen 2 über den Eingriffssteg 32 zueinander abgestützt sind.

Insbesondere dann, wenn die stoffschlüssige Verbindung durch Verkleben gebildet wird, kann Klebstoff auch im Bereich des Eingriffsstegs 32 aufgebracht werden, sodass eine stoffschlüssige Klebeverbindung auch im Bereich des Eingriffsstegs 32 geschaffen wird.

Die Verbindungselemente 3 sowohl des Ausführungsbeispiels gemäß Fig. 1 bis 3 als auch des Ausführungsbeispiels gemäß Fig. 4 und 5 sind vorzugsweise aus einem elektrisch isolierenden Kunststoffmaterial gefertigt, sodass über die Verbindungselemente 3 eine (zusätzliche) elektrische Isolierung der Anschlusseinrichtungen 2 zueinander bereitgestellt werden kann.

Der der Erfindung zugrunde liegende Gedanke ist nicht auf die vorangehend geschilderten Ausführungsbeispiele beschränkt, sondern lässt sich auch in andersgearteter Weise verwirklichen.

Anschlusseinrichtungen der hier beschriebenen Art können ganz unterschiedlich ausgestaltet sein und insbesondere elektrische Anschlüsse in Form von Federkraftanschlüssen, Schraubanschlüssen, Schneidanschlüssen, Crimpanschlüssen oder dergleichen verwirklichen.

Die Anschlusseinrichtungen können Reihenklemmen, Steckverbinder oder auch Grundleisten verwirklichen und können vorzugsweise in aneinander angereihter Weise an eine Leiterplatte angesetzt werden.

### Bezugszeichenliste

- 1: Baugruppe
- 2: Anschlusseinrichtung
- 2A, 2B: Paare
- 20: Gehäuse
- 200: Anschlussstelle (Stecköffnung)
- 201: Betätigungsöffnung
- 21, 22: Gehäuseseite
- 210, 220: Stufe
- 211, 221: Verbindungsfläche
- 23: Gehäuseseite
- 24: Gehäuseseite
- 240, 241: Verbindungsfläche
- 25: Gehäuseseite
- 26: Gehäuseseite
- 3: Verbindungselement
- 30: Grundkörper
- 31: Verbindungsabschnitt
- 310, 311: Stufe
- 312, 313: Stegabschnitt
- 314: Außenseite
- 32: Eingriffssteg
- 4: Elektrischer Leiter
- 40: Leiterende
- 5: Leiterplatte
- 50: Kontaktierungsstelle
- A: Anreihrichtung
- E: Steckrichtung
- L: Laserschweißstrahl

## Patentansprüche

1. Baugruppe (1) einer elektrischen Einrichtung, mit einer Mehrzahl von modular entlang einer Anreihrichtung (A) aneinander anreihbaren Anschlusseinrichtungen (2), die je ein Gehäuse (20) und zumindest eine Anschlussstelle (200) zum Anschließen zumindest eines elektrischen Leiters (4) aufweisen, und mit einem Verbindungselement (3), das einen Grundkörper (30) und einen an dem Grundkörper (30) geformten Verbindungsabschnitt (31) aufweist und das ausgebildet ist, zwei entlang der Anreihrichtung (A) zueinander benachbarte Anschlusseinrichtungen (2) der Mehrzahl von Anschlusseinrichtungen (2) miteinander zu verbinden, wobei der Grundkörper (30) entlang einer Ebene senkrecht zur Anreihrichtung (A) erstreckt ist und einen Flächenabschnitt ausbildet, der sich bei miteinander verbundenen Anschlusseinrichtungen flächig zwischen den benachbarten Anschlusseinrichtungen erstreckt, **dadurch gekennzeichnet, dass** das Verbindungselement (3) über den Verbindungsabschnitt (31) stoffschlüssig mit dem Gehäuse (20) zumindest einer der zwei zueinander benachbarten Anschlusseinrichtungen (2) verbunden ist.

2. Baugruppe (1) nach Anspruch 1, **dadurch gekennzeichnet, dass** das Verbindungselement (3) über den Verbindungsabschnitt (31) mit der zumindest einen der zwei zueinander benachbarten Anschlusseinrichtungen (2) durch Verkleben oder durch Schweißen stoffschlüssig verbunden ist.

3. Baugruppe (1) nach Anspruch 1 oder 2, **dadurch gekennzeichnet, dass** der Verbindungsabschnitt (31) zumindest abschnittsweise um den Grundkörper (30) herum erstreckt ist.

4. Baugruppe (1) nach einem der vorangehenden Ansprüche, **dadurch gekennzeichnet, dass** der Verbindungsabschnitt (31) sich in einer Stellung, in der das Verbindungselement (31) an die zumindest eine der zwei zueinander benachbarten Anschlusseinrichtungen (2) angesetzt ist, zumindest abschnittsweise um das Gehäuse (20) der zumindest einen der zwei zueinander benachbarten Anschlusseinrichtungen (2) herum erstreckt.

5. Baugruppe (1) nach einem der vorangehenden Ansprüche, **dadurch gekennzeichnet, dass** der Verbindungsabschnitt (31) entlang der Anreihrichtung (A) an zumindest einer Seite von dem Grundkörper (30) vorsteht.

6. Baugruppe (1) nach einem der vorangehenden Ansprüche, **dadurch gekennzeichnet, dass** der Verbindungsabschnitt (31) einen entlang der Anreihrichtung (A) von dem Grundkörper (30) vorstehenden Stegabschnitt (312, 313) ausbildet.

7. Baugruppe (1) nach Anspruch 6, **dadurch gekennzeichnet, dass** der Stegabschnitt (312, 313) in einer Stellung, in der das Verbindungselement (31) an die zumindest eine der zwei zueinander benachbarten Anschlusseinrichtungen (2) angesetzt ist, das Gehäuse (20) der zumindest einen der zwei zueinander benachbarten Anschlusseinrichtungen (2) derart übergreift, dass der Stegabschnitt (312, 313) quer zur Anreihrichtung (A) einer an dem Gehäuse (20) angeordneten Verbindungsfläche (211, 221, 240, 241) zugewandt ist.

8. Baugruppe (1) nach Anspruch 7, **dadurch gekennzeichnet, dass** der Stegabschnitt (312, 313) aus einem für einen Laserschweißstrahl (L) transparenten Material und das Gehäuse (20) zumindest an der Verbindungsfläche (211, 221, 240, 241) aus einem für einen Laserschweißstrahl (L) absorbierenden Material gefertigt sind.

9. Baugruppe (1) nach einem der vorangehenden Ansprüche, **dadurch gekennzeichnet, dass** das Gehäuse (20) der zumindest einen der zwei zueinander benachbarten Anschlusseinrichtungen (2) am Übergang einer parallel zum Grundkörper (30) des Verbindungselements (3) erstreckten, ersten Gehäuseseite (21, 22) zu einer quer zur ersten Gehäuseseite (21, 22) erstreckten, zweiten Gehäuseseite (23, 25) eine Stufe (210, 220) aufweist, die eine gegenüber der zweiten Gehäuseseite (23, 25) versetzte Verbindungsfläche (210, 220) ausbildet, wobei der Verbindungsabschnitt (31) des Verbindungselements (3) zur flächigen Anlage an der Verbindungsfläche (210, 220) in die Stufe (210, 220) eingreift.

10. Baugruppe (1) nach Anspruch 9, **dadurch gekennzeichnet, dass** der Verbindungsabschnitt (31) derart in die Stufe (210, 220) eingreift, dass der Verbindungsabschnitt (31) an seiner nach Außen gewandten Außenseite (314) bündig mit der zweiten Gehäuseseite (21, 22) ist.

11. Baugruppe (1) nach einem der vorangehenden Ansprüche, **dadurch gekennzeichnet, dass** das Verbindungselement (3) ein erstes Paar (2A) von entlang der Anreihrichtung (A) zueinander benachbarten Anschlusseinrichtungen (2) und ein zweites Paar (2B) von entlang der Anreihrichtung (A) zueinander benachbarten Anschlusseinrichtungen (2), das entlang einer senkrecht zur Anreihrichtung (A) erstreckten Höhenrichtung (H) zu dem ersten Paar (2A) von Anschlusseinrichtungen (2) versetzt angeordnet ist, miteinander verbindet.

12. Baugruppe (1) nach Anspruch 11, **dadurch gekennzeichnet, dass** das Verbindungselement (3) über den Verbindungsabschnitt (31) stoffschlüssig mit dem Gehäuse (20) zumindest einer Anschlusseinrichtung (2) des ersten Paares (2A) von Anschlusseinrichtungen (2) und zumindest einer Anschlusseinrichtung (2) des zweiten Paares (2B) von Anschlusseinrichtungen (2) verbunden ist.

13. Verfahren zum Herstellen einer Baugruppe (1) einer elektrischen Einrichtung, wobei bei dem Verfahren eine Mehrzahl von modularen Anschlusseinrichtungen (2), die je ein Gehäuse (20) und zumindest eine Anschlussstelle (200) zum Anschließen zumindest eines elektrischen Leiters (4) aufweisen, entlang einer Anreihrichtung (A) aneinander angereiht werden, wobei zwei entlang der Anreihrichtung (A) zueinander benachbarte Anschlusseinrichtungen (2) der Mehrzahl von Anschlusseinrichtungen (2) über ein Verbindungselement (3), das einen Grundkörper (30) und einen an dem Grundkörper (30) geformten Verbindungsabschnitt (31) aufweist, miteinander verbunden werden,
wobei der Grundkörper (30) entlang einer Ebene senkrecht zur Anreihrichtung (A) erstreckt ist und einen Flächenabschnitt ausbildet, der sich bei miteinander verbundenen Anschlusseinrichtungen flächig zwischen den benachbarten Anschlusseinrichtungen erstreckt,
**dadurch gekennzeichnet, dass**
das Verbindungselement (3) über den Verbindungsabschnitt (31) stoffschlüssig mit dem Gehäuse (20) zumindest einer der zwei zueinander benachbarten Anschlusseinrichtungen (2) verbunden wird.

## Claims

1. Assembly (1) of an electrical device, having a plurality of connection devices (2) which can be lined up with each other in a modular manner along a lining-up direction (A) and each comprise a housing (20) and at least one connection point (200) for the connection of at least one electrical conductor (4), and having a connecting element (3) which has a main body (30) and a connecting section (31) formed on the main body (30) and is designed for connecting two connection devices (2) of the plurality of connection devices (2) that are adjacent to each other along the lining-up direction (A), wherein the main body (30) extends along a plane perpendicular to the lining-up direction (A) and forms a planar section which, when connection devices are connected to each other, extends in a planar manner between the adjacent connection devices, **characterized in that** the connecting element (3), by means of the connecting section (31), is connected in a materially bonded manner to the housing (20) of at least one of the two mutually adjacent connection devices (2).

2. Assembly (1) according to Claim 1, **characterized in that** the connecting element (3), by means of the connecting section (31), is connected in a materially bonded manner to the at least one of the two mutually adjacent connection devices (2) by adhesive bonding or by welding.

3. Assembly (1) according to Claim 1 or 2, **characterized in that** the connecting section (31) extends at least partially around the main body (30).

4. Assembly (1) according to any of the preceding claims, **characterized in that** the connecting section (31), in a position in which the connecting element (31) is fitted to the at least one of the two mutually adjacent connection devices (2), extends at least partially around the housing (20) of at least one of the two mutually adjacent connection devices (2).

5. Assembly (1) according to any of the preceding claims, **characterized in that** the connecting section (31) projects from the main body (30) on at least one side along the lining-up direction (A).

6. Assembly (1) according to any of the preceding claims, **characterized in that** the connecting section (31) forms a web section (312, 313) which projects from the main body (30) along the lining-up direction (A).

7. Assembly (1) according to Claim 6, **characterized in that** the web section (312, 313), in an position in which the connecting element (31) is fitted to the at least one of the two mutually adjacent connection devices (2), extends over the housing (20) of the at least one of the two mutually adjacent connection devices (2) in such a way that the web section (312, 313), transversely to the lining-up direction (A), faces a connecting surface (211, 221, 240, 241) arranged on the housing (20).

8. Assembly (1) according to Claim 7, **characterized in that** the web section (312, 313) is produced from a material which is transparent to a laser welding beam (L), and the housing (20), at least at the connecting surface (211, 221, 240, 241), is produced from a material which absorbs a laser welding beam (L).

9. Assembly (1) according to any of the preceding claims, **characterized in that** the housing (20) of the at least one of the two mutually adjacent connection devices (2), at the transition of a first housing side (21, 22), which extends parallel to the main body (30) of the connecting element (3), to a second housing side (23, 25), which extends transversely to the first housing side (21, 22), has a step (210, 220) which forms a connecting surface (210, 220) which is offset in relation to the second housing side (23, 25), wherein the connecting section (31) of the connecting element (3) engages into the step (210, 220) so as to bear in a planar manner against the connecting surface (210, 220).

10. Assembly (1) according to Claim 9, **characterized in that** the connecting section (31) engages into the step (210, 220) in such a way that the connecting section (31), on its outer side (314) facing the outside, is flush with the second housing side (21, 22).

11. Assembly (1) according to any of the preceding claims, **characterized in that** the connecting element (3) connects a first pair (2A) of connection devices (2) adjacent to each other along the lining-up direction (A) and a second pair (2B) of connection devices (2) adjacent to each other along the lining-up direction (A), the second pair of connection devices being arranged offset to the first pair (2A) of connection devices (2) along a vertical direction (H) which extends perpendicularly to the lining-up direction (A).

12. Assembly (1) according to Claim 11, **characterized in that** the connecting element (3), by means of the connecting section (31), is connected in a materially bonded manner to the housing (20) of at least one connection device (2) of the first pair (2A) of connection devices (2) and of at least one connection device (2) of the second pair (2B) of connection devices (2).

13. Method for producing an assembly (1) of an electrical device, wherein in the method a plurality of modular connection devices (2), each having a housing (20) and at least one connection point (200) for the connection of at least one electrical conductor (4), are lined up with each other along a lining-up direction (A), wherein two connection devices (2) of the plurality of connection devices (2) that are mutually adjacent along the lining-up direction (A) are connected to each other by means of a connecting element (3), which has a main body (30) and a connecting section (31) formed on the main body (30),
wherein the main body (30) extends along a plane perpendicular to the lining-up direction (A) and forms a planar section which, when connection devices are connected to each other, extends in a planar manner between the adjacent connection devices,
**characterized in that**
the connecting element (3), by means of the connecting section (31), is connected in a materially bonded manner to the housing (20) of at least one of the two mutually adjacent connection devices (2).

## Revendications

1. Ensemble (1) formant un dispositif électrique, comprenant une pluralité de dispositifs de connexion (2) agencés de manière modulaire le long d'une direction d'alignement (A), chacun comprenant un boîtier (20) et au moins un point de raccordement (200) pour le raccordement d'au moins un conducteur électrique (4), et comprenant un élément de liaison (3) qui comprend un corps de base (30) et une partie de liaison (31) formée sur le corps de base (30), et qui est conçu pour relier l'un à l'autre, selon la direction d'alignement (A), deux dispositifs de raccordement (2) adjacents de la pluralité de dispositifs de raccordement (2), le corps de base (30) s'étendant le long d'un plan perpendiculaire à la direction d'alignement (A) et formant une partie de surface qui, lorsque les dispositifs de raccordement sont raccordés entre eux, s'étend à plat entre les dispositifs de raccordement adjacents, **caractérisé en ce que** l'élément de liaison (3) est relié par la partie de liaison (31), par adhérence de matière, au boîtier (20) d'au moins l'un des deux dispositifs de raccordement (2) adjacents l'un à l'autre.

2. Ensemble (1) selon la revendication 1, **caractérisé en ce que** l'élément de liaison (3) est relié par adhérence de matière, par l'intermédiaire de la partie de liaison (31), à au moins l'un des deux dispositifs de raccordement (2) adjacents l'un à l'autre, par collage ou par soudage.

3. Ensemble (1) selon la revendication 1 ou la revendication 2, **caractérisé en ce que** la partie de liaison (31) s'étend au moins partiellement autour du corps de base (30).

4. Ensemble (1) selon l'une des revendications précédentes, **caractérisé en ce que** la partie de liaison (31) s'étend, dans une position dans laquelle l'élément de liaison (31) est appliqué contre ledit au moins un des deux dispositifs de raccordement (2) adjacents l'un à l'autre, au moins partiellement autour du boîtier (20) dudit au moins un des deux dispositifs de raccordement (2) adjacents l'un à l'autre.

5. Ensemble (1) selon l'une des revendications précédentes, **caractérisé en ce que** la partie de liaison (31) fait saillie selon la direction d'alignement (A) au niveau d'au moins un côté du corps de base (30).

6. Ensemble (1) selon l'une des revendications précédentes, **caractérisé en ce que** la partie de liaison (31) forme une partie formant nervure (312, 313) faisant saillie selon la direction d'alignement (A) à partir du corps de base (30).

7. Ensemble (1) selon la revendication 6, **caractérisé en ce que** la partie formant nervure (312, 313), dans une position dans laquelle l'élément de liaison (31) est placé sur au moins l'un des deux dispositifs de raccordement (2) adjacents l'un à l'autre, recouvre le boîtier (20) dudit au moins un des deux dispositifs de raccordement (2) adjacents l'un à l'autre de telle sorte que la partie formant nervure (312, 313) est tournée transversalement à la direction d'alignement (A) d'une surface de liaison (211, 221, 240, 241) aménagée sur le boîtier (20).

8. Ensemble (1) selon la revendication 7, **caractérisé en ce que** la partie formant nervure (312, 313) est réalisée dans un matériau transparent pour un faisceau de soudage laser (L) et le boîtier (20), au moins au niveau de la surface de liaison (211, 221, 240, 241) est constitué d'un matériau absorbant pour un faisceau de soudage laser (L).

9. Ensemble (1) selon l'une des revendications précédentes, **caractérisé en ce que** le boîtier (20) dudit au moins un des deux dispositifs de raccordement (2) adjacents l'un à l'autre, au niveau de la transition entre un premier côté du boîtier (21, 22) s'étendant parallèlement au corps de base (30) de l'élément de liaison (3) vers un deuxième côté de boîtier (23, 25) s'étendant transversalement au premier côté de boîtier (21, 22), comprend un gradin (210, 220) qui forme une surface de liaison (210, 220) décalée par rapport au deuxième côté de boîtier (23, 25), la partie de liaison (31) de l'élément de liaison (3) s'engageant dans le gradin (210, 220) pour venir en appui à plat contre la surface de liaison (210, 220).

10. Ensemble (1) selon la revendication 9, **caractérisé en ce que** la partie de liaison (31) s'engage dans le gradin (210, 220) de telle sorte que la partie de liaison (31) est affleurante avec le deuxième côté du boîtier (21, 22) sur son côté extérieur (314) orienté vers l'extérieur.

11. Ensemble (1) selon l'une des revendications précédentes, **caractérisé en ce que** l'élément de liaison (3) relie entre eux une première paire (2A) de dispositifs de raccordement (2) adjacents les uns aux autres dans la direction d'alignement (A) et une deuxième paire (2B) de dispositifs de raccordement (2) adjacents les uns aux autres dans la direction d'alignement (A) qui sont agencées de manière décalée par rapport à la première paire (2A) de dispositifs de raccordement (2) le long d'une direction de hauteur (H) s'étendant perpendiculairement à la direction d'alignement (A).

12. Ensemble (1) selon la revendication 11, **caractérisé en ce que** l'élément de liaison (3) est relié par adhérence de matière, par l'intermédiaire de la partie de liaison (31), au boîtier (20) d'au moins un dispositif de raccordement (2) de la première paire (2A) de dispositifs de raccordement (2) et d'au moins un dispositif de raccordement (2) de la deuxième paire (2B) de dispositifs de raccordement (2).

13. Procédé de fabrication d'un ensemble (1) formant un dispositif électrique, dans lequel une pluralité de dispositifs de raccordement modulaires (2), qui comprennent chacun un boîtier (20) et au moins un point de raccordement (200) pour raccorder au moins un conducteur électrique (4), sont alignés les uns à côté des autres le long d'une direction d'alignement (A), deux dispositifs de raccordement (2) de la pluralité de dispositifs de raccordement (2) qui sont adjacents l'un à l'autre le long de la direction d'alignement (A) étant reliés entre eux par un élément de liaison (3) qui comprend un corps de base (30) et une partie de liaison (31) formée sur le corps de base (30),
le corps de base (30) s'étendant le long d'un plan perpendiculaire à la direction d'alignement (A) et formant une partie de surface qui, lorsque les dispositifs de raccordement sont reliés entre eux, s'étend à plat entre les dispositifs de raccordement adjacents,
**caractérisé en ce que**
l'élément de liaison (3) est relié au boîtier (20) d'au moins l'un des deux dispositifs de raccordement (2) adjacents l'un à l'autre, par l'intermédiaire de la partie de liaison (31), par liaison de matière.
